# EUROPEAN PATENT APPLICATION

(11) **EP 4 502 363 A1**
(43) Date of publication of application: **05.02.2025**
(21) Application number: 23382816.9
(22) Date of filing: 04.08.2023
(51) Int. Cl.: F03D 1/06, F03D 80/30

(54) **INSULATED BLADE TIP FOR A LIGHTNING PROTECTION SYSTEM IN A WIND TURBINE BLADE**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

It is described an insulated blade tip (11) for a lightning protection system in a wind turbine blade (5). The described insulated blade tip (11) comprises: an electrically conductive receptor unit (12) having an external part (121) and an internal part (122), wherein the external part (121) forms a lightning receptor; a lightning cable (13) electrically connected to the internal part (122) and configured for being connected to an insulated electric cable for conducting a lightning from the insulated blade tip (11) to a blade root of the wind turbine blade (5); an electrically insulating block (14) having an internal cavity (16), in which the internal part (122) and the lightning cable (13) are placed. The external part (121) is arranged at a first external surface (1411) of the electrically insulating block (14). Further, a space (19) between the (i) the internal part (122) and/or the lightning cable (13) and (ii) an inner surface (171, 181) of the cavity (16) is filled at least partially with resin (20). Further, it is described a method for fabricating such an insulated blade tip (11) and a wind turbine blade (5) as well as a wind turbine (1) with such an insulated blade tip (11).

## Description

### Field of invention

The present invention relates in general to wind turbines blades with a lightning protection system. More in particular, the invention relates to an insulated blade tip for a lightning protection system in a wind turbine blade. Furthermore, the present invention relates to a method for fabricating such insulated blade tip and to a wind turbine comprising a rotor with at least one wind turbine blade having such insulated blade tip.

### Art Background

Lightning protection systems (LPS) for wind turbine blades comprise generally an insulated blade tip having an electrically conductive receptor unit and a lightning cable. The electrically conductive receptor unit has an external part and an internal part, which are electrically connected to each other. The external part might also referred to as receptor or lightning receptor and is arranged at an external surface of the insulated blade tip and protrudes from an external surface of the wind turbine blade. The internal part is electrically connected to the lightning cable for conducting the electric current being associated with a lightning strike to an insulated electric cable within the blade, so that the lightning strike might be safely grounded.

The conductive parts of the insulated blade tip, which are arranged within the insulated blade tip, i.e. the internal part of the electrically conductive receptor unit and the lightning cable, are normally insulated by means of casting insulating material around them, as suggested, for example in WO 2016/074 677 A1.

A problem with such solutions might be that during the casting and the successive curing process, the casting material might shrink and thus not adhere any longer to the conductive parts within the insulated blade tips. Consequently, the insulation properties of the insulated blade tip degrade due to voids, compromising the lighting protection system's functionality.

In this case, severe structural damages to the wind turbine blade and the wind turbine might be caused and the lifespan of the insulated blade tip might be reduced.

### Summary of the invention

There might be the need for improving the reliability and the lifespan of the insulated blade tip.

According to a first aspect of the present invention, an insulated blade tip for a lightning protection system in a wind turbine blade is provided. The insulated blade tip comprises an electrically conductive receptor unit, a lightning cable and an electrically insulating block. The electrically conductive receptor unit has an external part and an internal part, wherein the external part forms a lightning receptor. The lightning cable is electrically connected to the internal part of the electrically conductive receptor unit and is configured for being connected to an insulated electric cable for conducting a lightning from the insulated blade tip to a blade root of the wind turbine blade. The electrically insulating block has an internal cavity, in which the internal part and the lightning cable are placed. According to the first aspect of the invention, the external part of the electrically conductive receptor unit is arranged at a first external surface of the electrically insulating block and a space between the (i) the internal part and/or the lightning cable and (ii) an inner surface of the cavity is filled at least partially with resin.

The provided insulated blade tip is based on the idea that a space within the cavity of the electrically insulating block can be filled with resin. Since resin is typically a highly insulating material, it can be prevented that a lightning strike does not strike the external part of the conductive receptor unit but directly strikes, via an empty space, the electric lightning cable within the interior of the electrically insulating block.

According to a second aspect of the present invention, a method for fabricating an insulated blade tip according to the first aspect of the present invention is provided. The method comprises according to the second aspect comprises four steps. In a first step a first part of the electrically insulating block, the first part having at least partially the cavity is provided. In a second step, the internal part and the lightning cable are arranged within the cavity. In a third step a second part of the electrically insulating block is assembled with the first part. In a fourth step, the space between the (i) the internal part and/or the lightning cable and (ii) an inner surface of the cavity is filled at least partially with resin.

According to a third aspect of the present invention, a wind turbine blade with an insulated tip according to the first aspect of the present invention is provided.

According to a fourth aspect of the present invention, a wind turbine comprising a rotor with at least one wind turbine blade according to the third aspect of the present invention is provided.

In the context of this document an electrically conductive receptor unit may be a unit designed to and configured for being attacked by a lightning strike, in particular by the leader of the lightning strike. To this end, the external part of the electrically conductive receptor unit is arranged at an external surface of the insulated blade tip and of the blade, so that the lightning strike can strike directly thereupon.

The internal part of the electrically conductive receptor unit is electrically connected on one hand to the external part and on the other hand to the lightning cable, so that the lightning strike can be electrically conducted from the external part to an insulated electrical cable within the wind rotor blade to a mass and be safely neutralized.

The lightning cable might be at least partially provided with an insulation for increasing the insulating properties of the lightning cable.

The electrically insulating block forms an outer part or a shell of the insulated blade tip and gives structural stability to the insulated blade tip. It furthermore provides electrical insulation to the components being internally arranged within the insulating block.

According to the present invention, a resin is used to fill, at least partially, the space between (i) the internal part and/or the lightning cable and (ii) the inner surface of the cavity. In such a way, it is possible to contrast the lack of adherence of the electrically insulating block to the internal part and/or the lightning cable by filling the voids within the cavity, so that the insulation properties of the electrically insulating block are less affected by the curing process of the same. In other words, the resin provides an improved electrical insulation within the cavity of the electrically insulating block, thus reducing the risk that a lightning strike or a lightning leader attacks one of the internal components of the insulated blade tip.

Therefore, structural damages to the insulated blade tip and the blade are less likely to occur and the lifespan of the insulated blade tip is improved.

According to an embodiment, the space between the (i) the internal part and/or the lightning cable and (ii) an inner surface of the cavity is completely filled with resin.

Therefore, all the possible voids in the cavities, which may be the result of a not perfect manufacturing process or aspect of deliberate design, such as a cavity or a channel configured to be filled with resin, are filled with resin, thus improving the electrical insulation properties of the electrically insulating block. As a consequence, the lightning strike or the lightning leader is less likely to attack one of the conductive elements arranged within the cavity of the electrically insulating block and more likely to attack and strike, as desired, at the external part.

According to an embodiment, the electrically insulating block comprises a first part and a second part, wherein the first part and the second part are assembled along a direction being perpendicular to a longitudinal axis of the insulated blade tip to form the electrically insulating block and wherein the cavity is provided in the first part and/or the second part.

In the context of the present document, "assembled" might eighter refer to mechanically joining the first part and the second part or to placing the first part and the second part the one adjacent to the other in such a way that a gap between the first part and the second part, which is then preferably filled with resin for improving the insulation properties of the insulated tip blade.

The electrically insulating block may consist of or comprise two parts or half shells with at least one of them comprising the cavity in which the conductive elements may be easily arranged. After the components are arranged in the cavity, the two parts or the two half shells are assembled together to form the electrically insulating block. Therefore, the assembly of the insulated blade tip according to such embodiment is particularly easy and fast to perform.

According to an embodiment, a further space between an assembling surface of the first part and an assembling surface of the second part is filled at least partially with resin. This may mean that the resin also fills the cavities and the voids being present at contact surfaces between the two parts or half shells, thus improving the electrical insulation of the conductive elements being arranged within the cavity of the electrically insulating block.

According to an embodiment, the electrically insulating block comprises a first longitudinal section and second longitudinal section assembled along a longitudinal direction of the insulated blade tip.

The electrically insulating block may also comprise a plurality of longitudinal sections, at least two, for providing a modularity of the electrically insulating block. Such a modularity may increase the freedom to design and to realize the electrically insulating block.

It is also possible, that the first longitudinal section and the second longitudinal section form the above mentioned first part or the above mentioned second part of the electrically insulating block. In such case, it is possible that both the first part and the second part are formed by a plurality of longitudinal sections or that only the first part or the second part is formed by a plurality of longitudinal sections. Thus, the electrically insulating block might be formed by a plurality of parts and each part might be formed by a plurality of longitudinal sections, so that there is a modularity of the electrically insulating block both in the longitudinal direction as well as in a direction perpendicular to the longitudinal one.

According to an embodiment of the present invention, a second further space between assembling surfaces of two contiguous longitudinal sections is filled with resin. This may further improve the electrical insulating properties of the electrically insulating block.

According to an embodiment, the external part is arranged in a vertical blind hole of the insulating block. This may provide the advantage that it is possible to easily insert and arrange the external part at the outer surface of the insulated blade tip.

According to an embodiment, the external part is a receptor bolt and the internal part is a receptor block. Further, the receptor bolt is detachably connected to the receptor block.

A receptor bolt within the meaning of the present disclosure may be any conductive element, which might mechanically and electrically connect to the internal part in a reversible and detachable way.

A receptor block within the meaning of the present disclosure may be any conductive element, which might be mechanically and electrically connected to the receptor bolt on the one side and to the lightning cable on the other side. The receptor block may mechanically anchor the electrically conductive receptor unit in the cavity of the electrically insulating block and may distribute the lightning strike from the receptor bolt to the lightning cable.

A bolt might be, for example, a screw, a pin or an anchor, which is fixed in a detachable and reversible way to the receptor block.

The receptor block might also be reversibly and detachably connected to the lightning cable. This may provide the advantage that it is possible to have a modular system of the electrically conductive elements of the insulated blade tip.

According to an embodiment, the insulated blade tip further comprises a further electrically conductive receptor unit, wherein the electrically conductive receptor unit and the further electrically conductive receptor unit are placed within the electrically insulating block at different locations along a longitudinal axis of the insulated blade tip, and wherein the further electrically conductive receptor unit is electrically connected to the lightning cable.

With this configuration it may be possible to have more electrically conductive receptor units within the insulated blade tip. As a consequence, it might be less likely that the lightning strike or the lightning leader strikes or attacks one of the electrically conductive elements arranged within the electrically insulating block.

The further electrically conductive receptor unit might be built in the same way or in a different way as the electrically conductive receptor unit.

According to an embodiment, the electrically conductive receptor unit further comprises a further external part, wherein the further external part is arranged at a second external surface of the electrically insulating block, the second external surface of the electrically insulating block being opposite to the first external surface of the electrically insulating block.

By arranging an external part at each of the opposing external surfaces of the insulated blade tip it may therefore be possible to further maximize the chance that the lightning strike or the lightning leader strikes at one of the external parts and does not attack an electrically conductive element arranged within the electrically insulating block.

According to an embodiment, the resin is an epoxy resin or polyurethane resin.

According to an embodiment, the electrically insulating block is made of or comprises one of the following materials: Polyethylene (non cross-linked Polyethylene or cross-linked Polyethylene), Polypropylene, Polyurethane, Polyvinyl chloride, Glass Fibre Reinforced Polymers (GFRP). Cross-linked Polyethylene is a polymer commonly used for insulating conductive parts in high-voltage applications.

According to an embodiment of the second aspect of the invention, the method further comprises, after the step of assembling the second part with the first part, arranging the first part and the second part in a casting mold for casting a wind turbine blade, and injecting the resin in the casting mold thereby filling the space between (i) the internal part and/or the lightning cable and (ii) the inner surface of the cavity with the resin while forming the wind turbine blade. This may provide the advantage that it is possible to fill the space between (i) the internal part and/or the lightning cable and (ii) the inner surface of the cavity with the resin in an effective manner during or together with the forming or casting process of the wind turbine blade.

In a preferred embodiment, a shell or a half-shell of glass fibers forming the outer part of the wind turbine blade are placed inside the casting mold before the first part and the second part are arranged into the casting mold itself.

It might thus be that the casting mold is designed for casting or manufacturing a whole blade or half of a blade, which is then assembled, after curing, with a second half of a blade to form the complete wind turbine blade (butterfly blades).

Therefore, the production costs and/or the production time of the wind turbine blade may decrease, while still assuring that the void spaces within the electrically insulating block are completely filled with resin and, thus, that the electrical insulation of the insulated blade tip is improved.

According to a further embodiment of the second aspect of the present invention, it might be that the external part of the electrically conductive receptor unit is provided and arranged in the insulated blade tip after the insulated blade tip or the wind turbine blade has been manufactured.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this document.

### Brief Description of the Drawings

- Figure 1: shows a schematic view of a wind turbine according to an embodiment of the present invention.
- Figure 2: shows an insulated blade tip according to an embodiment of the present invention.
- Figure 3: shows an exploded view of the insulated blade tip according to Figure 2.
- Figures 4 to 7: show schematic representations of an exemplary fabricating method according to an embodiment of the present invention.
- Figure 8: represents a schematic representation of a fabricating method according to an another exemplary embodiment of the present invention.

### Detailed Description of the Drawings

The illustration in the drawing is schematic. It is noted that in different figures, similar or identical elements or features are provided with the same reference signs. In order to avoid unnecessary repetitions elements or features which have already been elucidated with respect to a previously described embodiment are not elucidated again at a later position of the description.

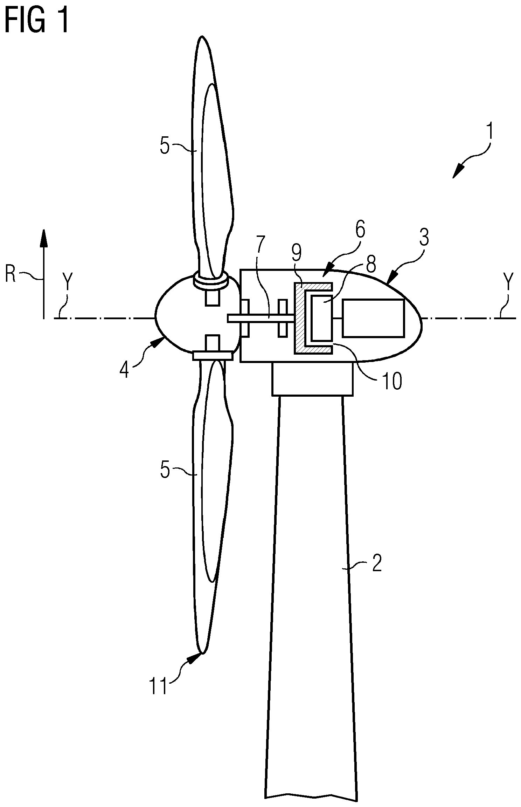

**Figure 1** shows a wind turbine 1 according to an embodiment of the present invention. The wind turbine 1 comprises a tower 2, which is mounted on a non-depicted fundament. A nacelle 3 is arranged on top of the tower 2.

The wind turbine 1 further comprises a wind rotor 4 having two, three or more wind turbine blades 5, also referred to as blades in the following description of the drawings. The wind rotor 4 is rotatable around a rotation axis Y, which is coincident with an axial direction, also referred to as Y. When not differently specified, the terms axial, radial and circumferential in the following are made with reference to the rotation axis Y. The blades 5 extend radially in a radial direction R with respect to the rotation axis Y.

The wind turbine 1 further comprises a permanent magnet electric generator 6. According to other possible embodiments of the present invention (not represented in the attached figures), the present invention may be applied to other types of electric machine design, e.g. induction, synchronous, etc. The wind rotor 4 is rotationally coupled with the permanent magnet generator 6 by means of a rotatable main shaft 7. The rotatable main shaft 7 extends along the rotational axis Y. The wind rotor 4 may also be rotationally coupled directly with the permanent magnet generator 6 (direct-drive generator configuration).

The permanent magnet electric generator 6 includes a stator 8 and a rotor 9. The rotor 9 is rotatable with respect to the stator 8 about the rotation axis Y. The rotor 9 is radially external with respect the stator 8 and rotatable about the rotation axis Y. The present invention may however also include not-shown embodiments in which the rotor 9 is radially internal with respect to the stator 8. A circumferential air gap 10 is provided between the stator 8 and the rotor 9.

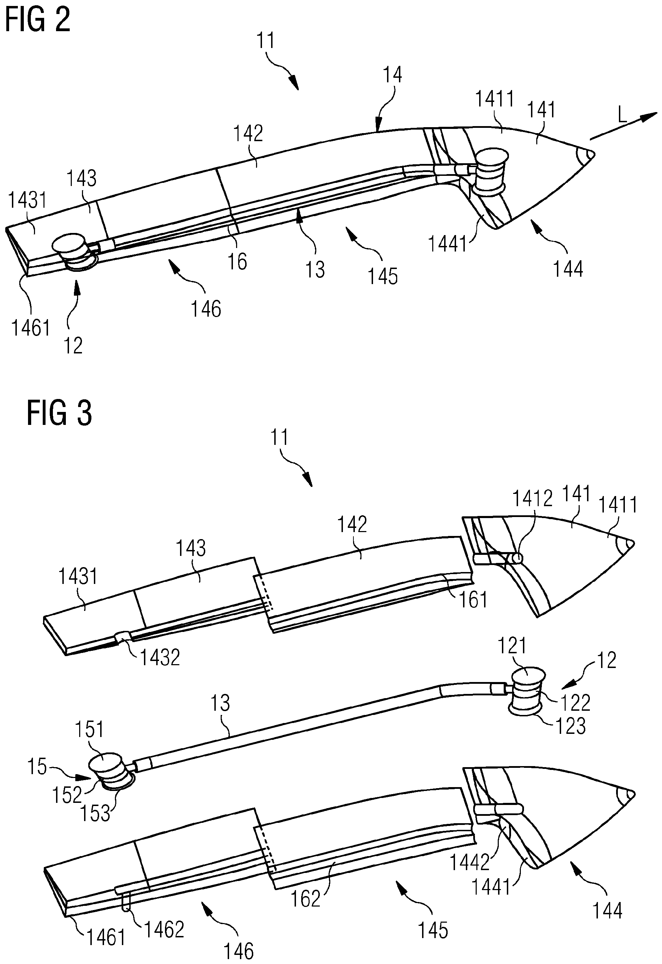

At least one of the blades 5 comprises an insulated blade tip 11, which is shown in further detail in **Figure 2** as well as in the exploded view of the same represented in **Figure 3****.**

The insulated blade tip 11 according to **Figures 2** and **3** comprises an electrically conductive receptor unit 12, a further electrically conductive receptor unit 15, a lightning cable 13 and an electrically insulating block 14.

The electrically conductive receptor unit 12 has an external part 121, an internal part 122 and a further external part 123. According to the exemplary embodiment described here, the external part 121 and the further external part 123 are both receptor bolts, which are mechanically connected, in a reversible and detachable manner, to the internal part 122. The internal part 122is a receptor block.

Similarly, the further electrically conductive receptor unit 15 has an external part 151, an internal part 152 and a further external part 153. The external part 151 and the further external part 153 are both receptor bolts, which are mechanically connected, in a reversible and detachable manner, to the internal part 152, which is a receptor block.

The lightning cable 13 is connected to the internal part 122 of the electrically conductive receptor unit 12 and to the internal part 152 of the further electrically conductive receptor unit 15. The lightning cable 13 is configured for being connected to an insulated electric cable (not shown) for conducting a lightning from the insulated blade tip 11 to a blade root of the wind turbine blade 5.

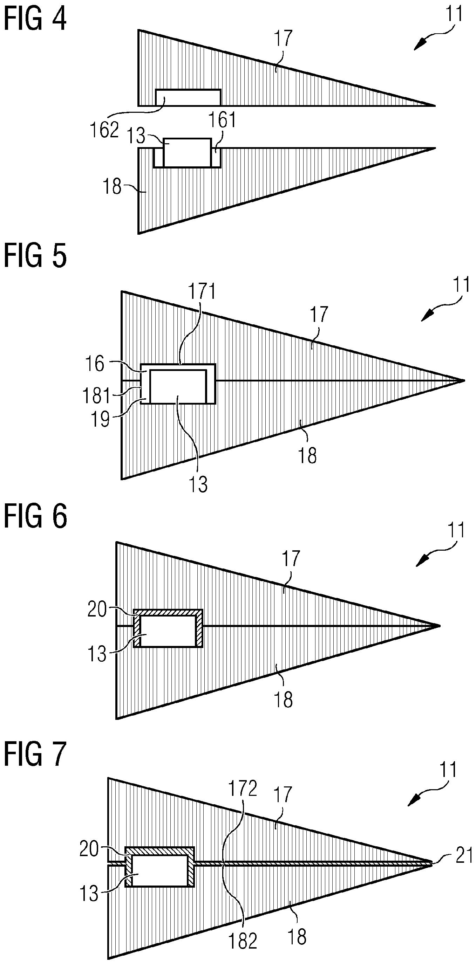

The electrically insulating block 14 comprises a first part 18 and a second part 17 (see **Figure 4** described below). These parts 18 and 17 are made of or comprise an electrically insulating material, which are assembled along a direction being perpendicular to a longitudinal axis L of the insulated blade tip. According to the exemplary embodiment described here the first part 18 comprises three longitudinal sections 141, 142, 143 and the second part 17 comprises three longitudinal sections 144, 145, 146. The longitudinal sections 141 to 143 are assembled along the longitudinal axis L of the insulated blade tip 11 to form the first part 18 and the longitudinal sections 144 to 146 are assembled along the longitudinal axis L of the insulated blade tip 11 to form the second part 17.

As can be further taken from Figure 3, the first part 18 has a first half cavity 161 and the second part 17 has a second half cavity 162, which form a cavity 16 when the first part 18 and the second part 18 are assembled together. The lightning cable 13 as well as the internal part 122 of the electrically conductive receptor unit 12 and the internal part 152 of the further electrically conductive receptor unit 15 are arranged in the cavity 16.

Within the longitudinal section 141 there is formed a vertical blind hole 1412, in which the external part 121 of the electrically conductive receptor unit 12 is placed. Also, the longitudinal section 144 has a vertical blind hole 1442, in which the further external part 123 of the electrically conductive receptor unit 12 is placed.

In a similar manner, the longitudinal section 143 has a vertical blind hole 1432, in which the external part 151 of the further electrically conductive receptor unit 15 is placed. Also, the longitudinal section 146 has a vertical blind hole 1462, in which the further external part 153 of the further electrically conductive receptor unit 15 is placed.

The external part 121 of the electrically conductive receptor unit 12 is arranged at an external surface 1411 of the longitudinal section 141 and the further external part 123 of the electrically conductive receptor unit 12 is arranged at a second external surface 1441 of the longitudinal section 144. The first external surface of 1411 and the second external surface 1441 are also external surfaces of the electrically insulating block 14. The second external surface 1441 is opposite to the first external surface 1411 with respect to an axis being perpendicular to the longitudinal axis L of the insulated blade tip 11.

Similarly, the external part 151 of the further electrically conductive receptor unit 15 is arranged at an external surface 1431 of the longitudinal section 143 and the further external part 153 of the further electrically conductive receptor unit 152 is arranged at a second external surface 1461 of the longitudinal section 146. The first external surface of 1431 and the second external surface 1461 are also external surfaces of the electrically insulating block 14. The second external surface 1461 is opposite to the first external surface 1431 with respect to an axis being perpendicular to the longitudinal axis L of the insulated blade tip 11.

The electrically conductive receptor unit 12 and the further electrically conductive receptor unit 15 are both placed within the electrically insulating block 14 at different locations along the longitudinal axis L of the insulated blade tip 11.

As evident from **Figures 6** and **7****,** a space between the (i) the internal part 122 of the electrically conductive receptor unit 12, the internal part 152 of the further electrically conductive receptor unit 15 and the lightning cable 13 and (ii) an inner surface of the cavity 16 is completely filled with resin.

**Figures 4** to **7** illustrate a fabrication method of the insulated blade tip 11 according to an embodiment of the present invention.

In a first step (**Figure 4**), the first part 18 with the half cavity 161 for a first portion of the electrically insulating block 14 is provided. Further, the second part 17 with the half cavity 162 of the electrically insulating block 14 is provided.

In a second step (also **Figure 4**), the internal part 122 of the electrically conductive receptor unit 12, the internal part 152 of the further electrically conductive receptor unit 15 and the lightning cable 13 are connected to one another both mechanically and electrically and are placed within the half cavity 161 (in **Figures 4** to **7** a schematic section of the lightning cable 13 is shown).

In a third step (**Figure 5**), the second part 17 with the half cavity 162 is assembled with the first part 18 along an axis perpendicular to the longitudinal axis L of the insulated blade tip 11 to form the electrically insulating block 14.

As evident from **Figure 5**, there is an empty space or void 19 between the lightning cable 13 and internal surfaces 171, 181 of the cavity 16. This space 19 is filled in a fourth and final step (**Figure 6**) with resin 20, such as epoxy resin, in order to fully insulate the lightning cable 13 as well as the internal part 122 of the electrically conductive receptor unit 12 and the internal part 152 of the further electrically conductive receptor unit 15.

As can be seen in **Figure 7****,** also a further space 21 between an assembling surface 182 of the first part 18 and an assembling surface 172 of the second part 17 is completely filled with resin 20. This allows to further improve the electrical insulation of the conductive elements (the internal part 122 of the electrically conductive receptor unit 12, the internal part 152 of the further electrically conductive receptor unit 15 and the lightning cable 13) placed within the cavity 16.

Analogously, though not shown, a space between respective assembling surfaces of two contiguous longitudinal sections 141 to 146 might also be completely filled with resin 20. Thereby, the electrical insulation of the conductive elements placed within the cavity 16 can be further improved.

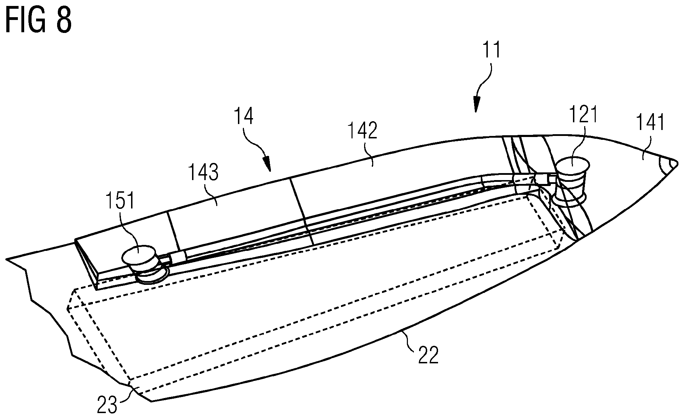

**Figure 8** is a schematic representation of an alternative method for fabricating the insulated blade tip 11 according to another embodiment of the present invention. According to this embodiment , the first part 18 and the second part 17, after they have been assembled together to form the electrically insulating block 14, are arranged within a casting mold 22 for casting the wind turbine blade 5. In the casting mold 22, there might also be a mandril 23, in order to have a hollow space within the wind turbine blade 5 to reduce its weight and increase its performance.

After the first part 18 and the second part 17 are arranged within the casting mold 22, the resin 20 is injected in the casting mold 22. Thereby, the space 19 is filled during the formation process of the wind turbine blade 5.

Independent of the grammatical term usage, individuals with male, female or other gender identities are included within the term.

## Claims

1. Insulated blade tip (11) for a lightning protection system in a wind turbine blade (5) comprising:
an electrically conductive receptor unit (12) having an external part (121) and an internal part (122), wherein the external part (121) forms a lightning receptor;
a lightning cable (13) electrically connected to the internal part (122) and configured for being connected to an insulated electric cable for conducting a lightning from the insulated blade tip (11) to a blade root of the wind turbine blade (5);
an electrically insulating block (14) having an internal cavity (16), in which the internal part (122) and the lightning cable (13) are placed,
wherein the external part (121) is arranged at a first external surface (1411) of the electrically insulating block (14) and
wherein a space (19) between the (i) the internal part (122) and/or the lightning cable (13) and (ii) an inner surface (171, 181) of the cavity (16) is filled at least partially with resin (20).

2. Insulated blade tip (11) according to claim 1, wherein the space (19) between the (i) the internal part (122) and/or the lightning cable (13) and (ii) an inner surface (171, 181) of the cavity (16) is completely filled with resin (20).

3. Insulated blade tip (11) according to claim 1 or 2, wherein the electrically insulating block (14) comprises:
a first part (18) and a second part (17),
wherein the first part (18) and the second part (17) are assembled along a direction being perpendicular to a longitudinal axis (L) of the insulated blade tip (11) to form the electrically insulating block (14) and
wherein the cavity (16) is provided in the first part (18) and/or the second part (17).

4. Insulated blade tip (11) according to claim 3, wherein a further space (21) between an assembling surface (182) of the first part (18) and an assembling surface (172) of the second part (17) is filled at least partially with resin (20).

5. Insulated blade tip (11) according to any of the preceding claims, wherein the electrically insulating block (14) comprises a first longitudinal section (141) and second longitudinal section (142) assembled along a longitudinal direction (L) of the insulated blade tip (11).

6. Insulated blade tip (11) according to any of the preceding claims, wherein the external part (121) is arranged in a vertical blind hole (1412) of the insulating block (14).

7. Insulated blade tip (11) according to any of the preceding claims, wherein the external part (121) is a receptor bolt and the internal part (121) is a receptor block and wherein the receptor bolt is detachably connected to the receptor block.

8. Insulated blade tip (11) according to any of the preceding claims further comprising:
a further electrically conductive receptor unit (15),
wherein the electrically conductive receptor unit (12) and the further electrically conductive receptor unit (15) are placed within the electrically insulating block (14) at different locations along a longitudinal axis (L) of the insulated blade tip (11), and
wherein the further electrically conductive receptor unit(15) is electrically connected to the lightning cable (13).

9. Insulated blade tip (11) according to any of the preceding claims, wherein the electrically conductive receptor unit (12) further comprises a further external part (123), wherein the further external part (123) is arranged at a second external surface (1441) of the electrically insulating block (14), the second external surface (1441) of the electrically insulating block (14) being opposite to the first external surface (1411) of the electrically insulating block (14).

10. Insulated blade tip (11) according to any of the preceding claims, wherein the resin (20) is an epoxy resin.

11. Insulated blade tip (11) according to any of the preceding claims, wherein the electrically insulating block (14) is made of or comprises one of the following materials: Polyethylene, Polypropylene, Polyurethane, Polyvinyl chloride, Glass Fibre Reinforced Polymers (GFRP).

12. Method for fabricating an insulated blade tip (11) according to any of the preceding claims, the method comprising:
providing a first part (18) of the electrically insulating block (14), the first part having at least partially the cavity (16);
arranging within the cavity (16) the internal part (122) and the lightning cable (13);
assembling a second part (17) of the electrically insulating block (14) with the first part (18); and
filling a space (19) between the (i) the internal part (122) and/or the lightning cable (13) and (ii) an inner surface (171, 181) of the cavity (16) at least partially with resin (20).

13. Method according to claim 12 further comprising:
after the step of assembling the second part (17) with the first part (18), arranging the first part (18) and the second part (17) in a casting mold (22) for casting a wind turbine blade (5), and
injecting the resin (20) in the casting mold thereby filling the space (19) between the (i) the internal part (122) and/or the lightning cable (13) and (ii) the inner surface (171, 181) of the cavity (16) with the resin (20) while forming the wind turbine blade (5).

14. Wind turbine blade (5) comprising an insulated blade tip (11) according to any of claims 1 to 11.

15. Wind turbine (1) comprising a rotor (4) with at least one blade (5) according to claim 14.
